# EUROPEAN PATENT APPLICATION

(11) **EP 4 140 810 A1**
(43) Date of publication of application: **01.03.2023**
(21) Application number: 22183363.5
(22) Date of filing: 06.07.2022
(51) Int. Cl.: B60Q 1/48, B60Q 1/50, B60Q 9/00

(54) **DRIVING ASSIST SYSTEM, DRIVING ASSIST METHOD, AND DRIVING ASSIST PROGRAM**

(30) Priority: 30.08.2021 JP 2021140130
(71) Applicant: TOYOTA JIDOSHA KABUSHIKI KAISHA, Toyota-shi, Aichi-ken, 471-8571 (JP)
(72) Inventor: HACHISUKA, Motoaki, Toyota-shi, 471-8571 (JP); IKUTA, Tetsuya, Toyota-shi, 471-8571 (JP); KANO, Yoshinori, Toyota-shi, 471-8571 (JP)
(74) Representative: J A Kemp LLP

(57) **Abstract**

A driving assist system (10) installed on a vehicle (1) includes a controller (100). The controller (100) executes a drawing process that controls a luminescent device (60) to draw an assist figure (AS) with a lateral width (Wa) corresponding to a vehicle width (Wv) of the vehicle (1) on a road surface along a direction of travel of the vehicle (1).

## Description

### BACKGROUND

### Technical Field

The present disclosure relates to a technique for assisting driving of a vehicle by a driver.

### Background Art

Patent Literature 1 discloses a road surface drawing system installed on a vehicle. The road surface drawing system draws an image for emphasizing a road in which the vehicle is traveling on a road surface ahead of the vehicle. At this time, the road surface drawing system changes a distance of the image drawn on the road surface according to a speed of the vehicle.

### List of Related Art

Patent Literature 1: Japanese Laid-Open Patent Application Publication No. JP-2018-192836

### SUMMARY

A driver needs to drive a vehicle while paying attention to a vehicle width, for example, in a parking lot, a narrow road, passing by an oncoming vehicle, and the like. A driver who lacks confidence in a sense of vehicle width feels a feeling of insecurity and/or difficulty of driving.

An object of the present disclosure is to provide a driving assist technique that can improve a feeling of security of a driver of a vehicle and/or ease of driving.

A first aspect is directed to a driving assist system installed on a vehicle.

The driving assist system includes a controller.

The controller executes a drawing process that controls a luminescent device to draw an assist figure with a lateral width corresponding to a vehicle width of the vehicle on a road surface along a direction of travel of the vehicle.

A second aspect is directed to a driving assist method for assisting driving of a vehicle.

The driving assist method includes a drawing process that controls a luminescent device to draw an assist figure with a lateral width corresponding to a vehicle width of the vehicle on a road surface along a direction of travel of the vehicle.

A third aspect is directed to a driving assist program that is executed by a computer and for assisting driving of a vehicle.

The driving assist program causes the computer to execute a drawing process that controls a luminescent device to draw an assist figure with a lateral width corresponding to a vehicle width of the vehicle on a road surface along a direction of travel of the vehicle.

According to the present disclosure, the assist figure with the lateral width corresponding to the vehicle width is drawn on the road surface along the direction of travel of the vehicle. A driver of the vehicle is able to obtain an excellent sense of vehicle width by looking at the assist figure drawn. As a result, the driver's feeling of security and/or ease of driving is improved.

### BRIEF DESCRIPTION OF DRAWINGS

FIG. 1 is a conceptual diagram for explaining a drawing process by a driving assist system according to an embodiment of the present disclosure;
FIG. 2 is a conceptual diagram for explaining a drawing process by a driving assist system according to an embodiment of the present disclosure;
FIG. 3 is a conceptual diagram for explaining an application example of a drawing process by a driving assist system according to an embodiment of the present disclosure;
FIG. 4 is a conceptual diagram for explaining a warning process by a driving assist system according to an embodiment of the present disclosure;
FIG. 5 is a block diagram showing a configuration example of a driving assist system according to an embodiment of the present disclosure;
FIG. 6 is a block diagram showing a functional configuration example of a driving assist system according to an embodiment of the present disclosure;
FIG. 7 is a flow chart showing an example of a driving assist process by a driving assist system according to an embodiment of the present disclosure;
FIG. 8 is a flow chart showing an example of a drawing process (Step S120) according to an embodiment of the present disclosure;
FIG. 9 is a flow chart showing an example of an overlap determination process (Step S130) according to an embodiment of the present disclosure; and
FIG. 10 is a flow chart showing an example of a warning process (Step S140) according to an embodiment of the present disclosure.

### EMBODIMENTS

Embodiments of the present disclosure will be described with reference to the accompanying drawings.

### 1. OUTLINE

### 1-1. Drawing Process

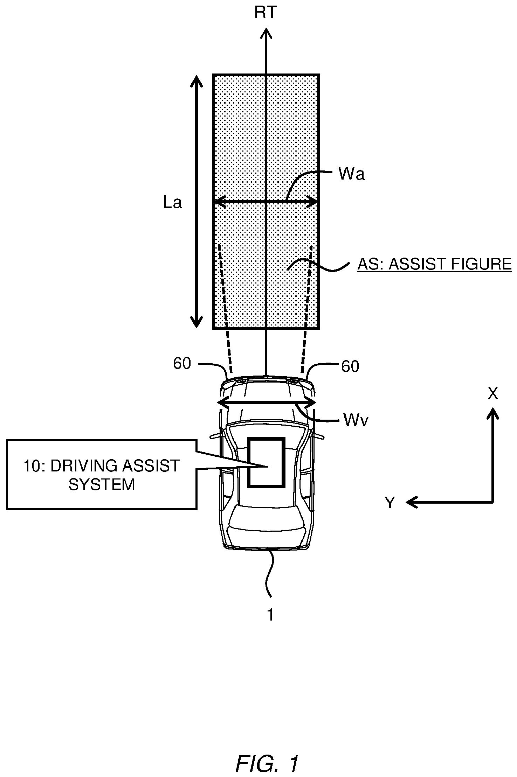

FIG. 1 is a conceptual diagram for explaining an outline of a driving assist system 10 according to the present embodiment. The driving assist system 10 is installed on a vehicle 1 and assists driving of the vehicle 1 by a driver.

The driver needs to drive the vehicle 1 while paying attention to a vehicle width, for example, in a parking lot, a narrow road, passing by an oncoming vehicle, and the like. A driver who lacks confidence in a sense of vehicle width feels a feeling of insecurity and/or difficulty of driving. In view of the above, the driving assist system 10 according to the present embodiment provides a driving assist function that improves a driver's feeling of security and/or ease of driving.

More specifically, the driving assist system 10 includes a luminescent device 60 installed on the vehicle 1. Examples of the luminescent device 60 include a headlamp, a projector, and the like. The driving assist system 10 uses the luminescent device 60 to draw an "assist figure AS", which is for assisting the driver's driving, on a road surface ahead of the vehicle 1. This process is hereinafter referred to as a "drawing process."

Here, directions are defined. An X-direction and a Y-direction respectively represent a direction of travel (i.e., a longitudinal direction) and a lateral direction of the vehicle 1. The X-direction and the Y-direction intersect with each other. A travel route RT, which is a route along which the vehicle 1 travels, extends forward from a current position. The X-direction and the Y-direction can be defined at each point on the travel route RT. A direction of the tangent to the travel route RT at each point corresponds to the X-direction (i.e., the direction of travel of the vehicle 1).

A vehicle width Wv is a lateral width of the vehicle 1, that is, a width of the vehicle 1 in the Y-direction. An assist figure width Wa is a lateral width of the assist figure AS, that is, a width of the assist figure AS in the Y-direction. The vehicle width Wv is reflected in the assist figure width Wa. That is, the assist figure width Wa is set to a width corresponding to the vehicle width Wv. For example, the assist figure width Wa is set to be substantially the same as the vehicle width Wv (Wa = Wv). As another example, considering a margin width Wm, the assist figure width Wa may be set to a sum of the vehicle width Wv and the margin width Wm (Wa = Wv + Wm). Here, the margin width Wm is sufficiently smaller than the vehicle width Wv.

The driving assist system 10 controls the luminescent device 60 to draw such the assist figure AS on the road surface ahead along the X-direction (i.e., the direction of travel of the vehicle 1). In other words, the driving assist system 10 draws the assist figure AS on the road surface ahead such that the assist figure AS extends along the travel route RT of the vehicle 1. As shown in FIG. 1, the travel route RT extends in the X-direction from a center of the vehicle 1, and an X-direction center line of the assist figure AS coincides with the travel route RT.

An assist figure length La is a longitudinal width of the assist figure AS, that is, a length of the assist figure AS in the X-direction. The assist figure length La is arbitrary. For example, the assist figure length La is set to several meters to several tens of meters. The assist figure length La may vary depending on a vehicle speed. In that case, the assist figure length La increases as the vehicle speed increases.

In the example shown in FIG. 1, the assist figure AS is rectangular. However, the shape of the assist figure AS is not limited to rectangle. The shape of the assist figure AS varies according to the travel route RT of the vehicle 1.

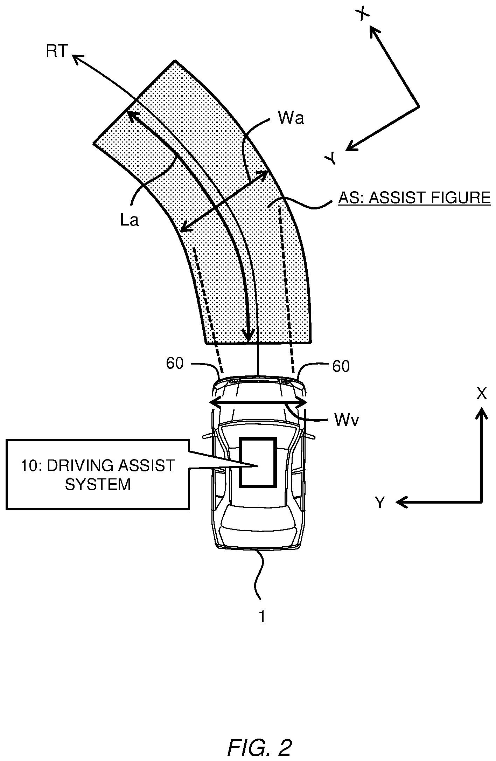

FIG. 2 shows the assist figure AS when the vehicle 1 makes a turn. The travel route RT can be calculated (estimated) from a steering angle and a vehicle speed of the vehicle 1. In the case of vehicle turning, the travel route RT becomes a curve, and thus the assist figure AS which is drawn so as to extend along the travel route RT also bends. That is, a steering operation performed by the driver is reflected in the assist figure AS. It should be noted that, even in the example shown in FIG. 2, the travel route RT extends in the X-direction from the center of the vehicle 1, and the X-direction center line of the assist figure AS coincides with the travel route RT.

In the case of vehicle turning, a radius difference between inner wheels may be taken into consideration. That is, the assist figure width Wa may be set to include the radius difference between inner wheels at the time of vehicle turning. The radius difference between inner wheels can be calculated based on a wheel base, a track width, a steering angle, and the like of the vehicle 1.

It can also be said that the assist figure AS represents an "expected vehicle body passage area" through which a vehicle body of the vehicle 1 is expected to pass. That is, in the drawing process, the driving assist system 10 draws the assist figure AS representing the expected vehicle body passage area on the road surface ahead of the vehicle 1.

### 1-2. Effects

According to the present embodiment, as described above, the driving assist system 10 draws the assist figure AS with the lateral width corresponding to the vehicle width Wv on the road surface along the direction of travel of the vehicle 1. A driver of the vehicle 1 is able to obtain an excellent sense of vehicle width by looking at the assist figure AS drawn. As a result, the driver's feeling of security and/or ease of driving is improved.

When the driver performs a steering operation, the direction of travel (i.e., the travel route RT) caused by the steering operation is reflected in the assist figure AS. The driver is able to obtain an excellent sense of vehicle width even when performing the steering operation. As a result, the driver's feeling of security and/or ease of driving is improved.

Moreover, the driver is able to recognize a possibility of collision between the vehicle 1 and an obstacle at an early stage by looking at the assist figure AS drawn. Therefore, the driver is able to perform a driving operation for avoiding the collision with the obstacle well in advance. As a result, safety is improved.

Furthermore, pedestrians and the like around the vehicle 1 are able to recognize the direction of travel of the vehicle 1 and the expected vehicle body passage area, by looking at the assist figure AS drawn. The pedestrians and the like can take care not to enter the assist figure AS drawn. As a result, safety is improved.

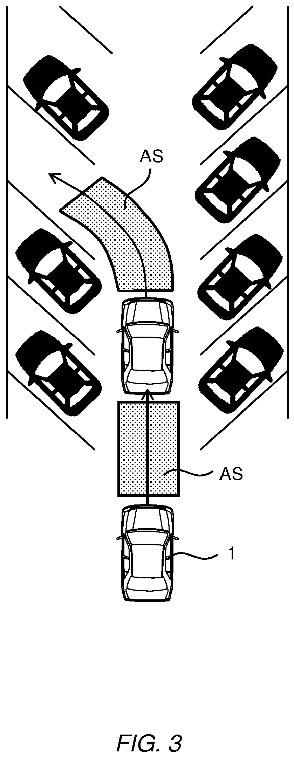

FIG. 3 shows an application example of the drawing process. In the example shown in FIG. 3, the drawing process is performed when parking the vehicle 1 in a parking space. The driver is able to safely, securely, and easily park the vehicle 1 in the parking space by looking at the assist figure AS drawn. The drawing process is also useful for such situations as entry into a narrow road, passing by an oncoming vehicle, and the like.

### 1-3. Warning Process

The driving assist system 10 according to the present embodiment may perform a "warning process" as a part of the driving assist in addition to the drawing process.

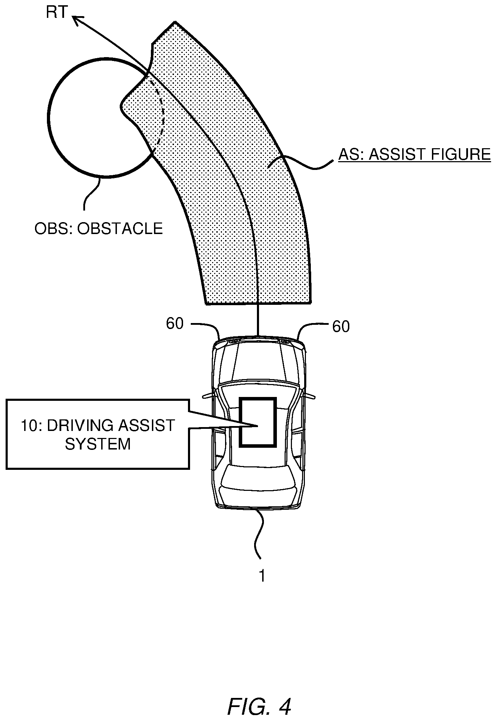

FIG. 4 is a conceptual diagram for explaining the warning process. When the assist figure AS drawn overlaps with an obstacle OBS, there is a possibility of collision between the vehicle 1 and the obstacle OBS. Therefore, when detecting an overlap between the assist figure AS and the obstacle OBS, the driving assist system 10 notifies the driver of a warning. The overlap between the assist figure AS and the obstacle OBS can be detected, for example, by using a camera installed on the vehicle 1. The warning is notified to the driver through at least one of senses of hearing, touch, and vision.

Performing the warning process in addition to the drawing process can further improve the safety.

### 2. CONFIGURATION EXAMPLE OF DRIVING ASSIST SYSTEM

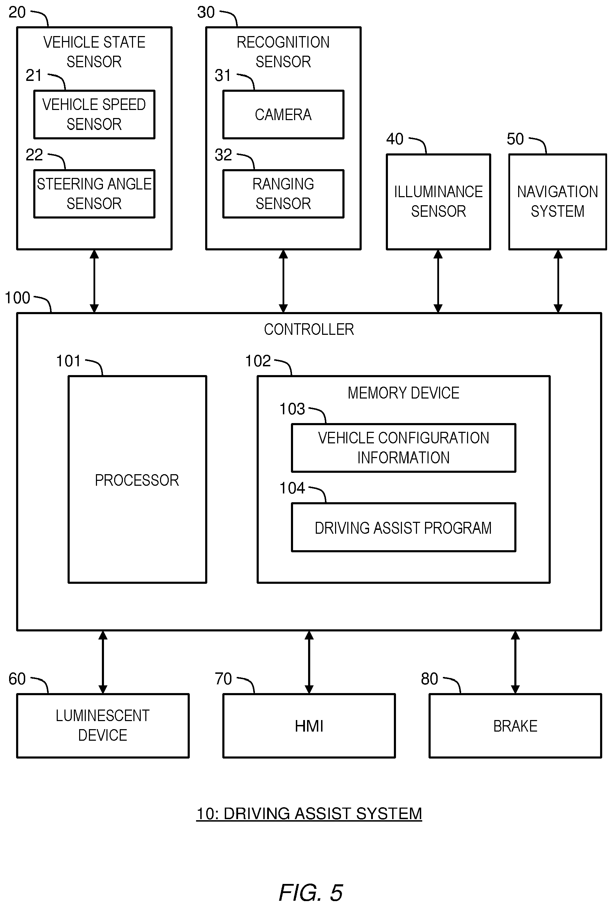

FIG. 5 is a block diagram showing a configuration example of the driving assist system 10 according to the present embodiment. The driving assist system 10 includes a vehicle state sensor 20, a recognition sensor 30, an illuminance sensor 40, a navigation system 50, the luminescent device 60, an HMI (Human Machine Interface) 70, a brake 80, and a controller 100.

The vehicle state sensor 20 detects a state of the vehicle 1. The vehicle state sensor 20 includes at least a vehicle speed sensor 21 and a steering angle sensor 22. The vehicle speed sensor 21 detects the vehicle speed of the vehicle 1. The steering angle sensor 22 detects the steering angle of the vehicle 1. The vehicle state sensor 20 may further include an acceleration sensor, a yaw rate sensor, and the like.

The recognition sensor 30 recognizes a situation around the vehicle 1. The recognition sensor 30 at least includes one or more cameras 31. The one or more cameras 31 are installed to be able to image a situation at least ahead of the vehicle 1. The recognition sensor 30 may further include a ranging sensor 32 such as a LIDAR(Laser Imaging Detection and Ranging) and a radar.

The illuminance sensor 40 detects illuminance around the vehicle 1.

The navigation system 50 holds map information. In addition, the navigation system 50 uses a position sensor to acquire position information of the vehicle 1. The position sensor is exemplified by a GNSS(Global Navigation Satellite System).

The luminescent device 60 draws a desired figure on a road surface ahead of the vehicle 1. Examples of the luminescent device 60 include a high definition headlamp, a projector, and the like. The high definition headlamp has, for example, a resolution of 1 million pixels or higher.

The HMI 70 provides information to the driver and receives an input from the driver. For example, the HMI 70 may include at least one of a speaker, a vibration device, and a display. The vibration device vibrates at least one of a steering wheel and a driver seat. The vibration device may be a haptic device. The display is exemplified by an HUD (Head-Up Display). The HMI 70 may further include a switch for turning ON/OFF the driving assist function by the driving assist system 10.

The brake 80 generates a braking force.

The controller (control device) 100 is a computer that controls the vehicle 1 and the driving assist system 10. The controller 100 includes one or more processors 101 (hereinafter simply referred to as a processor 101) and one or more memory devices 102 (hereinafter simply referred to as a memory device 102). The processor 101 executes a variety of processing. For example, the processor 101 includes a CPU (Central Processing Unit). The memory device 102 stores a variety of information necessary for the processing by the processor 101. Examples of the memory device 102 include a volatile memory, a non-volatile memory, an HDD (Hard Disk Drive), an SSD (Solid State Drive), and the like. The controller 100 may include one or more ECUs (Electronic Control Units).

Vehicle configuration information 103 is information indicating a configuration of the vehicle 1. The vehicle configuration information 103 includes the vehicle width Wv of the vehicle 1. The vehicle configuration information 103 may include a wheel base and a track width of the vehicle 1. The vehicle configuration information 103 is stored in advance in the memory device 102.

Driving assist program 104 is a computer program executed by the processor 101. The functions of the controller 100 are implemented by the processor 101 executing the driving assist program 104. The driving assist program 104 is stored in the memory device 102. The driving assist program 104 may be recorded on a non-transitory computer-readable recording medium.

The controller 100 acquires the information from the vehicle state sensor 20, the recognition sensor 30, the illuminance sensor 40, and the navigation system 50. Moreover, the controller 100 controls the luminescent device 60 and the brake 80. In addition, the controller 100 provides information to the driver or receives information from the driver through the HMI 70.

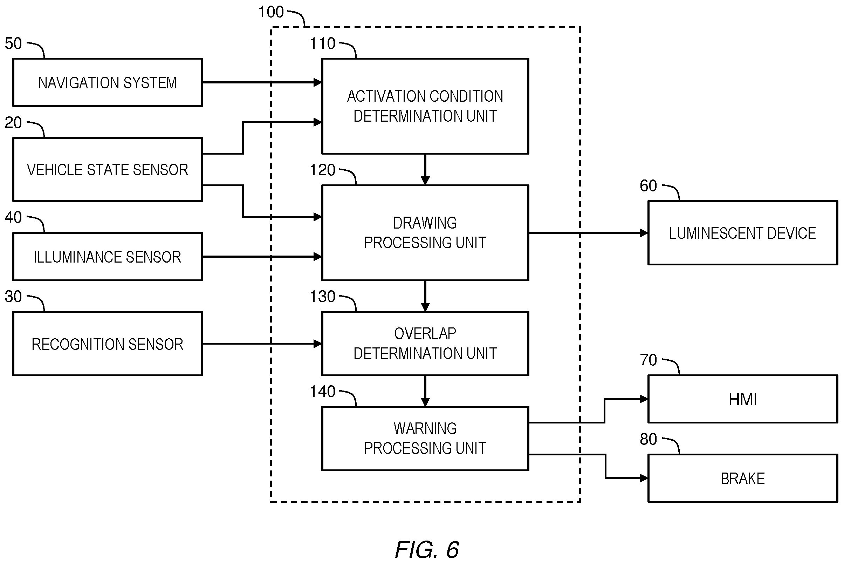

FIG. 6 is a block diagram showing a functional configuration example of the driving assist system 10. The control device 100 includes an activation condition determination unit 110, a drawing processing unit 120, an overlap determination unit 130, and a warning processing unit 140 as functional blocks. These functional blocks are implemented by a cooperation of the processor 101 executing the driving assist program 104 and the memory device 102.

Hereinafter, the driving assist process by the driving assist system 10 according to the present embodiment will be described.

### 3. EXAMPLE OF DRIVING ASSIST PROCESS

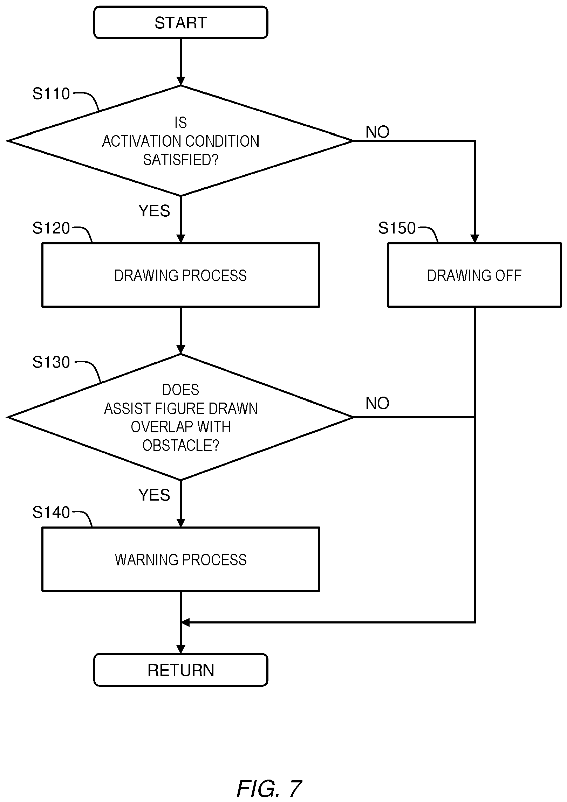

FIG. 7 is a flow chart showing an example of the driving assist process by the driving assist system 10 according to the present embodiment.

### 3-1. Step S110 (Activation Condition Determination Process)

In Step S110, the activation condition determination unit 110 determines whether or not an activation condition of the drawing process is satisfied.

For example, the activation condition of the drawing process is that "the vehicle speed of the vehicle 1 is lower than a predetermined speed." The vehicle speed is obtained by the vehicle speed sensor 21.

As another example, the activation condition of the drawing process may be that "the vehicle 1 is performing a parking operation" (see FIG. 3). For example, when the vehicle 1 is present in a parking lot, it is determined that the vehicle 1 is performing a parking operation. Whether or not the vehicle 1 is present in a parking lot can be determined based on the position information and the map information obtained by the navigation system 50. Alternatively, when the vehicle 1 is present in a parking lot and the vehicle speed is lower than a threshold, it may be determined that the vehicle 1 is performing a parking operation. The vehicle speed is obtained by the vehicle speed sensor 21.

When the activation condition is satisfied (Step S110; Yes), the processing proceeds to Step S120. On the other hand, when the activation condition is not satisfied (Step S110; No), the processing proceeds to Step S150.

### 3-2. Step 120 (Drawing Process)

In Step S120, the drawing processing unit 120 executes the drawing process. More specifically, the drawing processing unit 120 controls the luminescent device 60 to draw the assist figure AS with the lateral width corresponding to the vehicle width Wv on the road surface along the direction of travel of the vehicle 1.

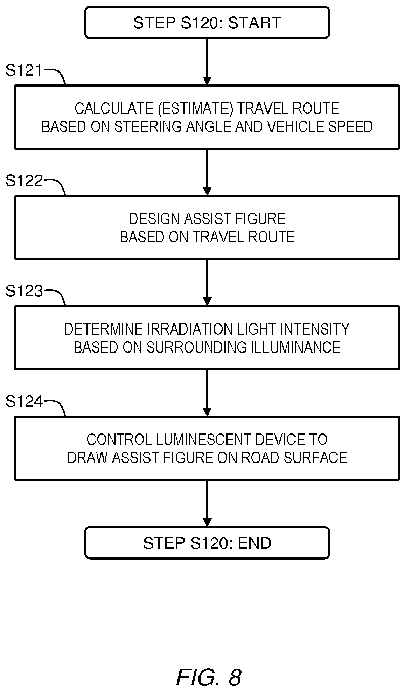

FIG. 8 is a flow chart showing an example of the drawing process (Step S120).

In Step S121, the drawing processing unit 120 calculates (estimates) the travel route RT of the vehicle 1 based on the steering angle and the vehicle speed of the vehicle 1. The steering angle and the vehicle speed are obtained by the vehicle state sensor 20.

In Step S122, the drawing processing unit 120 designs the assist figure AS based on the travel route RT. More specifically, the drawing processing unit 120 designs the assist figure AS such that the assist figure AS drawn on the road surface extends along the travel route RT (see FIGS. 1 and 2).

The assist figure width Wa of the assist figure AS is set to a width corresponding to the vehicle width Wv. The vehicle width Wv is obtained from the vehicle configuration information 103. For example, the assist figure width Wa is set to be substantially the same as the vehicle width Wv (Wa = Wv). As another example, considering a margin width Wm, the assist figure width Wa may be set to a sum of the vehicle width Wv and the margin width Wm (Wa = Wv + Wm). Here, the margin width Wm is sufficiently smaller than the vehicle width Wv.

The assist figure width Wa may be set to include a radius difference between inner wheels at a time of vehicle turning. The radius difference between inner wheels can be calculated based on the wheel base, the track width, the steering angle, and the like of the vehicle 1. The wheel base and the track width are obtained from the vehicle configuration information 103. The steering angle is obtained by the steering angle sensor 22.

In Step S123, the drawing processing unit 120 appropriately determines an irradiation light intensity based on the illuminance around the vehicle 1. The illuminance around the vehicle 1 is obtained by the illuminance sensor 40.

In Step S124, the drawing processing unit 120 controls the luminescent device 60 to draw the assist figure AS on the road surface ahead of the vehicle 1.

### 3-3. Step S130 (Overlap Determination Process)

In Step S130, the overlap determination unit 130 determines whether or not the assist figure AS drawn overlaps with an obstacle OBS. When the assist figure AS drawn overlaps with an obstacle OBS (Step S130; Yes), the processing proceeds to Step S140. Otherwise (Step S130; No), the processing in the current cycle ends.

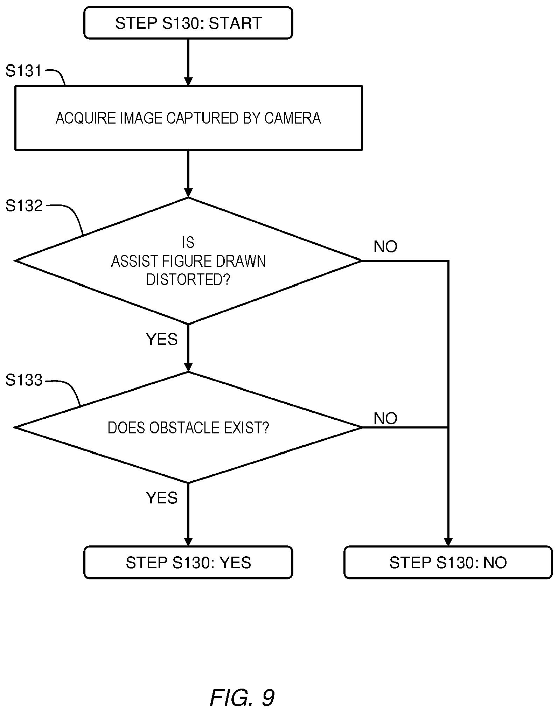

FIG. 9 is a flow chart showing an example of the overlap determination process (Step S130).

In Step S131, the overlap determination unit 130 acquires an image ahead of the vehicle 1, the image being captured by the camera 31. The image ahead of the vehicle 1 includes the assist figure AS drawn.

In Step S132, the overlap determination unit 130 determines, based on the image, whether or not the assist figure AS drawn is distorted from an expected shape. For example, the assist figure AS shown in FIG. 2 does not overlap with an obstacle OBS and thus has an expected shape. That is, the shape of the assist figure AS shown in FIG. 2 is the expected shape. On the other hand, the assist figure AS shown in FIG. 4 overlaps with an obstacle OBS and is distorted from the expected shape. The overlap determination unit 130 is able to determine whether or not distortion occurs based on the shape of the assist figure AS included in the image captured by the camera 31.

When the assist figure AS drawn is not distorted from the expected shape (Step S132; No), the overlap determination unit 130 determines that the assist figure AS drawn does not overlap with an obstacle OBS (Step S130; No). It is possible to easily determine that there is no overlap with an obstacle OBS based merely on the shape of the assist figure AS, without determining whether an obstacle OBS exists or not. This is preferable from a viewpoint of reduction in processing load.

On the other hand, when the assist figure AS drawn is distorted from the expected shape (Step S132; Yes), the processing proceeds to Step S133.

In Step S133, the overlap determination unit 130 determines whether or not there is an obstacle OBS at a position of the assist figure AS. Whether or not there is an obstacle OBS at the position of the assist figure AS can be determined based on a result of recognition by the recognition sensor 30 described above. For example, analyzing the image captured by the camera 31 makes it possible to determine whether or not there is an obstacle OBS at the position of the assist figure AS. As another example, it is also possible to determine whether or not there is an obstacle OBS at the position of the assist figure AS based on a result of measurement by the ranging sensor 32.

When there is no obstacle OBS at the position of the assist figure AS (Step S133; No), the overlap determination unit 130 determines that the distortion of the assist figure AS is caused not by an obstacle OBS but by a road surface slope and the like. In this case, the overlap determination unit 130 determines that the assist figure AS drawn does not overlap with an obstacle OBS (Step S130; No).

On the other hand, when there is the obstacle OBS at the position of the assist figure AS (Step S133; Yes), the overlap determination unit 130 determines that the assist figure AS drawn overlaps with the obstacle OBS (Step S130; Yes). In this case, there is a possibility of collision between the vehicle 1 and the obstacle OBS. The processing proceeds to the following Step S140.

### 3-4. Step S140 (Warning Process)

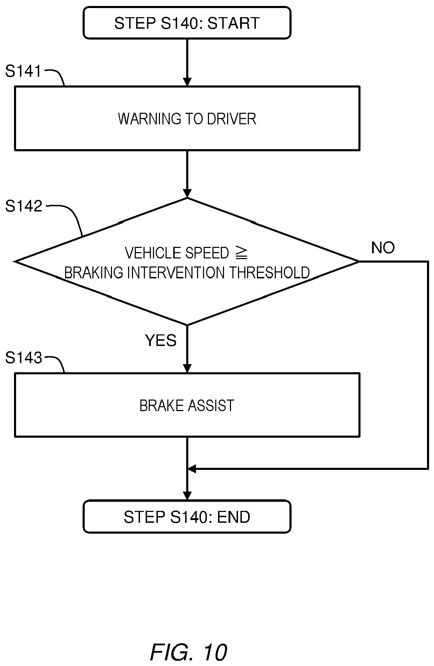

In Step S140, the warning processing unit 140 performs the warning process. FIG. 10 is a flow chart showing an example of the warning process (Step S140).

In Step S141, the warning processing unit 140 notifies the driver of a warning through the HMI 70. The warning is notified to the driver through at least one of senses of hearing, touch, and vision. For example, the warning processing unit 140 outputs an audio warning from the speaker. As another example, the warning processing unit 140 vibrates the vibration device installed on the steering wheel or the driver seat. As yet another example, the warning processing unit 140 displays a warning message on the HUD

In Step S142, the warning processing unit 140 determines whether or not the vehicle speed is equal to or higher than a braking intervention threshold. The vehicle speed is obtained by the vehicle speed sensor 21. When the vehicle speed is equal to or higher than the braking intervention threshold (Step S142; Yes), the processing proceeds to Step S143. Otherwise (Step S142; No), Step S140 ends.

In Step S143, the warning processing unit 140 automatically performs braking by controlling the brake 80. Such the braking intervention makes it possible to reduce the possibility of the collision.

### 3-5. Step S150

In Step S150, the drawing processing unit 120 stops the drawing process.

### 4. SUMMARY

According to the present embodiment, as described above, the driving assist system 10 draws the assist figure AS with the lateral width corresponding to the vehicle width Wv on the road surface along the direction of travel of the vehicle 1. The driver of the vehicle 1 is able to obtain an excellent sense of vehicle width by looking at the assist figure AS drawn. As a result, the driver's feeling of security and/or ease of driving is improved.

When the driver performs a steering operation, the direction of travel (i.e., the travel route RT) caused by the steering operation is reflected in the assist figure AS. The driver is able to obtain an excellent sense of vehicle width even when performing the steering operation. As a result, the driver's feeling of security and/or ease of driving is improved.

Moreover, the driver is able to recognize a possibility of collision between the vehicle 1 and an obstacle at an early stage by looking at the assist figure AS drawn. Therefore, the driver is able to perform a driving operation for avoiding the collision with the obstacle well in advance. As a result, the safety is improved.

Furthermore, pedestrians and the like around the vehicle 1 are able to recognize the direction of travel of the vehicle 1 and the expected vehicle body passage area, by looking at the assist figure AS drawn. The pedestrians and the like can take care not to enter the assist figure AS drawn. As a result, the safety is improved.

Furthermore, according to the present embodiment, the drawing process is executed only when the activation condition is satisfied. Since the drawing process is not always in execution, it is suppressed that the driver feels annoying.

When detecting an overlap between the assist figure AS drawn and the obstacle OBS, the driving assist system 10 may perform the warning process that notifies the driver of a warning. Performing the warning process in addition to the drawing process can further improve the safety.

## Claims

1. A driving assist system (10) installed on a vehicle (1),
the driving assist system (10) comprising a controller (100) configured to execute a drawing process that controls a luminescent device (60) to draw an assist figure (AS) with a lateral width (Wa) corresponding to a vehicle width (Wv) of the vehicle (1) on a road surface along a direction of travel of the vehicle (1).

2. The driving assist system (10) according to claim 1, wherein
the controller (100) is further configured to:
execute the drawing process when a vehicle speed of the vehicle (1) is lower than a predetermined speed; and
refrain from executing the drawing process when the vehicle speed is equal to or higher than the predetermined speed.

3. The driving assist system (10) according to claim 1, wherein
the controller (100) executes the drawing process when the vehicle (1) performs a parking operation.

4. The driving assist system (10) according to any one of claims 1 to 3, wherein
the controller (100) is further configured to:
calculate a travel route (RT) of the vehicle (1) based on a steering angle and a vehicle speed of the vehicle (1); and
execute the drawing process such that the assist figure (AS) drawn on the road surface extends along the travel route (RT).

5. The driving assist system (10) according to claim 4, wherein
the lateral width (Wa) of the assist figure (AS) corresponding to the vehicle width (Wv) includes a radius difference between inner wheels when the vehicle (1) makes a turn.

6. The driving assist system (10) according to any one of claims 1 to 5, wherein
the controller (100) is further configured to:
acquire an image ahead of the vehicle (1), the image being captured by a camera (31) installed on the vehicle (1);
execute a determination process that determines, based on the image, whether the assist figure (AS) drawn overlaps with an obstacle (OBS); and
notify a driver of the vehicle (1) of a warning when the assist figure (AS) drawn overlaps with the obstacle (OBS).

7. The driving assist system (10) according to claim 6, wherein
in the determination process, the controller (100) is further configured to:
determine, based on the image, whether the assist figure (AS) drawn is distorted from an expected shape;
when the assist figure (AS) drawn is distorted from the expected shape, determine whether there is an obstacle (OBS) at a position of the assist figure (AS) based on the image; and
when there is an obstacle (OBS) at the position of the assist figure (AS), determine that the assist figure (AS) overlaps with the obstacle (OBS).

8. A driving assist method for assisting driving of a vehicle (1),
the driving assist method comprising a drawing process that controls a luminescent device (60) to draw an assist figure (AS) with a lateral width (Wa) corresponding to a vehicle width (Wv) of the vehicle (1) on a road surface along a direction of travel of the vehicle (1).

9. A driving assist program (104) that is executed by a computer and for assisting driving of a vehicle (1),
the driving assist program (104) causing the computer to execute a drawing process that controls a luminescent device (60) to draw an assist figure (AS) with a lateral width (Wa) corresponding to a vehicle width (Wv) of the vehicle (1) on a road surface along a direction of travel of the vehicle (1).
